# EUROPÄISCHE PATENTSCHRIFT

(11) **EP 2 111 119 B1**
(45) Veröffentlichungstag und Bekanntmachung des Hinweises auf die Patenterteilung: **21.10.2015**
(21) Anmeldenummer: 07845287.7
(22) Anmeldetag: 10.12.2007
(51) Int. Cl.: A23G 1/02, A23L 3/015

(54) **VERFAHREN ZUR VERRINGERUNG DER KEIMZAHL IN EINER SCHOKOLADEMASSE**
PROCESS FOR REDUCING THE MICROBIAL COUNT IN A CHOCOLATE MASS
PROCÉDÉ DE DIMINUTION DU NOMBRE DES GERMES DANS UNE PÂTE DE CHOCOLAT

(30) Priorität: 13.12.2006 AT 20592006
(43) Veröffentlichungstag der Anmeldung: 28.10.2009
(73) Patentinhaber: Agrana Beteiligungs- Aktiengesellschaft, 1020 Wien (AT)
(72) Erfinder: KOBERL, Karl, 8211 Ilztal (AT); MUHR, Herbert, 8211 Ilztal (AT)
(74) Vertreter: Nemec, Harald
(86) Internationale Anmeldenummer: PCT/AT2007/000558
(87) Internationale Veröffentlichungsnummer: WO 2008/070888

(56) Entgegenhaltungen:
- DE-A1- 3 111 352
- DE-A1- 19 612 957
- US-A- 2 401 077
- US-A- 6 017 572

## Beschreibung

Die Erfindung betrifft ein Verfahren zur Verringerung der Keimzahl in einer Schokolademasse.

Aus der DE-A1 2 513 563 ist ein Verfahren zur Entfernung von Schadaromen, Stinkstoffen u.dgl. aus Kakao- oder Kakaobuttermassen bekannt, gemäß welchem der Kakaomasse zusätzliches Wasser beigegeben wird und die Masse in dünner Schicht behandelt wird, wonach überschüssiges Wasser sowie die Schadaromen oder Sinkstoffe entgast wird.

Die DE-A1 31 11 352 beschreibt ein Verfahren zur mechanisch/thermischen Behandlung fluider Massen, insbesondere Kakaomassen, gemäß welchem die Masse unter Druck in einem Staureaktor behandelt wird, wobei ebenfalls eine Wasserzufuhr zur Kakaomasse erfolgen kann.

Aus der EP 0 974 275 B1 ist ein Verfahren zur Sterilisation eines bei Raumtemperatur festen Lebensmittels mit den folgenden Verfahrensschritten bekannt:
a) Das Lebensmittel wird auf eine Temperatur T₁ oberhalb seiner Schmelztemperatur Tₛ erwärmt.
b) Während eines Aufheizzeitraums wird Wasserdampf in feinstverteilter Form in das flüssige Lebensmittel eingebracht und dieses auf eine Temperatur T₂ erhitzt, wodurch in dem Lebensmittel enthaltene Mikroorganismen und deren Dauerformen (Sporen) abgetötet werden.
c) Zumindest während eines Teils des Aufheizzeitraums wird das Lebensmittel unter einen gegenüber dem Atmosphärendruck erhöhten Druck p₁ gesetzt.
d) Der Wassergehalt des Lebensmittels wird wieder auf einen Wert von weniger als 5 Gew.-% vermindert.

Das Einbringen von Wasserdampf von außen in das flüssige Lebensmittel wird gemäß EP 0 974 275 mittels einer Düse, die unterhalb einer rotierenden Dissolverscheibe angebracht ist, durchgeführt.

Dies erfordert aber einen zusätzlichen apparativen Aufwand.

Die vorliegende Erfindung stellt sich zur Aufgabe, ein Verfahren zur Verfügung zu stellen, mit welchem ohne zusätzlichen apparativen Aufwand die Keimzahl in einer Schokolademasse gesenkt werden kann.

Diese Aufgabe wird mit einem Verfahren gemäß Patentanspruch 1 gelöst. Bevorzugte Ausführungsformen sind in den Unteransprüchen beschrieben.

Das erfindungsgemäße Verfahren zur Verringerung der Keimzahl in einer Schokolademasse wird bevorzugt wie folgt durchgeführt:
Eine bereits in flüssiger Form angelieferte Schokolademasse (Temperatur ca. 50°C) wird in einem für die Behandlung von Schokolademassen üblichen zylindrischen Behälter mit einem Rührwerk vorgelegt. Ca. 4% Wasser (bezogen auf die Schokolademasse) werden bei einer Temperatur von ebenfalls ca. 40-50°C zugegeben.

Der Behälter wird geschlossen und die Mischung unter ständigem Rühren auf eine Zieltemperatur von ca. 105°C bis 110°C erwärmt.

Ab Erreichen einer Temperatur von 80°C wird in bekannter Weise der Kopfraum des Behälters gedämpft. Der Dampfeinlass befindet sich ca. 80 cm oberhalb der Schokolade/Wasser-Mischung und ist mit dem Behälterdom bündig. Es wird dabei kein Dampf in die Schokolademasse eingebracht.

Während des Erhitzens der Mischung wird im Behälter ein Überdruck von ca. 1,5 bis 2,0 bar aufgebaut.

Bei Erreichen der Zieltemperatur wird der Druck im Behälter schlagartig um ca. 0,5 bar entspannt und anschließend wieder auf den ursprünglichen Überdruck angehoben. Bevorzugt bewegt sich die Dauer sowohl des Entspannens als auch des erneuten Beaufschlagens mit Druck im Sekundenbereich.

Durch die Druckentspannung kommt es zur spontanen Bildung von Wasserdampf und zur gleichmäßigen Durchdringung desselben in der Schokolademasse. Je nach Art der Schokolademasse wird dieser Vorgang wird einmal durchgeführt oder bis zu vier- oder fünfmal wiederholt.

Anschließend wird die Mischung auf ca. 55°C abgekühlt und durch Anlegen eines Vakuums restliches Wasser entzogen.

Durch das - insbesondere mehrfache - teilweise Absenken des Druckes im Behälter und Wieder-Anheben auf den ursprünglichen Überdruck kommt es zu einer zusätzlichen Verringerung der Keimzahl in der Schokolademasse, ohne dass diesbezüglich zusätzliche apparative Einrichtungen benötigt werden.

## Patentansprüche

1. Verfahren zur Verringerung der Keimzahl in einer Schokolademasse, enthaltend die Schritte:
a) Vorlegen einer Schokolademasse und von Wasser in einem sterilisierbaren Behälter
b) Aufheizen der Schokolademasse und des Wassers und Rühren auf eine Zieltemperatur über 100°C
c) Aufbau eines Überdruckes im Behälter zumindest während eines Teils des Aufheizzeitraumes,
d) Entgasen und Abkühlen des Behälters
**dadurch gekennzeichnet, dass**
e) nach Erreichen der Zieltemperatur, aber vor dem Schritt d) der Druck schlagartig teilweise abgesenkt wird, sodass im Behälter ein Überdruck verbleibt und anschließend
f) der Druck wieder auf den ursprünglichen Überdruck angehoben wird.

2. Verfahren gemäß Anspruch 1, **dadurch gekennzeichnet, dass** die Schritte e) und f) mehrfach hintereinander durchgeführt werden.

3. Verfahren gemäß Anspruch 2, **dadurch gekennzeichnet, dass** die Schritte e) und f) vierbis fünfmal wiederholt werden.

4. Verfahren gemäß einem der vorhergehenden Ansprüche, **dadurch gekennzeichnet, dass** die Schokolademasse im Schritt a) in flüssiger Form vorgelegt wird.

5. Verfahren gemäß einem der vorhergehenden Ansprüche, **dadurch gekennzeichnet, dass** im Schritt b) bei Erreichen einer Temperatur von 80°C der Kopfraum des Behälters in an sich bekannter Weise mit Dampf beaufschlagt wird.

6. Verfahren gemäß einem der vorhergehenden Ansprüche, **dadurch gekennzeichnet, dass** die Zieltemperatur 105° bis 130°C beträgt.

7. Verfahren gemäß einem der vorhergehenden Ansprüche, **dadurch gekennzeichnet, dass** im Schritt c) ein Überdruck von 1,5 bar bis 2,0 bar gegenüber Umgebungsdruck aufgebaut wird.

8. Verfahren gemäß einem der vorhergehenden Ansprüche, **dadurch gekennzeichnet, dass** im Schritt e) der Druck um 0,5 bar abgesenkt wird.

## Claims

1. A process for reducing the microbial count in a chocolate mass, comprising the steps of:
a) placing a chocolate mass and water in a sterilizable container
b) heating the chocolate mass and the water and stirring to a target temperature of more than 100°C
c) building up an overpressure in the container at least during part of the heating period,
d) degassing and cooling the container
**characterized in that**
e) upon reaching the target temperature, but prior to step d), the pressure is partially lowered abruptly so that an overpressure remains in the container and subsequently
f) the pressure is raised back to the original overpressure.

2. A process according to claim 1, **characterized in that** steps e) and f) are carried out successively several times.

3. A process according to claim 2, **characterized in that** steps e) and f) are repeated four to five times.

4. A process according to any of the preceding claims, **characterized in that**, in step a), the chocolate mass is provided in liquid form.

5. A process according to any of the preceding claims, **characterized in that**, in step b), upon reaching a temperature of 80°C, water vapour is supplied to the headspace of the container in a manner known per se.

6. A process according to any of the preceding claims, **characterized in that** the target temperature ranges from 105 to 130°C.

7. A process according to any of the preceding claims, **characterized in that**, in step c), an overpressure from 1.5 bar to 2.0 bar is built up in comparison to the ambient pressure.

8. A process according to any of the preceding claims, **characterized in that**, in step e), the pressure is lowered by 0.5 bar.

## Revendications

1. Procédé servant à réduire le nombre de germes dans une pâte de chocolat, comprenant les étapes consistant à :
a) placer au préalable une pâte de chocolat et de l'eau dans un récipient stérilisable ;
b) chauffer la pâte de chocolat et l'eau à une température cible supérieure à 100 °C et agiter le tout ;
c) établir une surpression dans le récipient au moins au cours d'une partie du laps de temps de chauffage ;
d) évacuer le gaz du récipient et le refroidir
**caractérisé en ce que**
e) une fois la température cible atteinte, mais avant l'étape d), la pression est abaissée en partie de manière brutale de manière à conserver une surpression dans le récipient, puis
f) la pression est à nouveau relevée de manière à s'établir à la surpression initiale.

2. Procédé selon la revendication 1, **caractérisé en ce que** les étapes e) et f) sont mises en oeuvre à de multiples reprises les unes après les autres.

3. Procédé selon la revendication 2, **caractérisé en ce que** les étapes e) et f) sont répétées quatre à cinq fois.

4. Procédé selon l'une quelconque des revendications précédentes, **caractérisé en ce que** la pâte de chocolat se présente à l'étape a) sous une forme liquide.

5. Procédé selon l'une quelconque des revendications précédentes, **caractérisé en ce que** l'espace supérieur du récipient est soumis d'une manière connue en soi à l'action de la vapeur à l'étape b) une fois une température de 80 °C atteinte.

6. Procédé selon l'une quelconque des revendications précédentes, **caractérisé en ce que** la température cible présente une valeur comprise entre 105 °C et 130 °C.

7. Procédé selon l'une quelconque des revendications précédentes, **caractérisé en ce qu'**est établie à l'étape c) une surpression allant de 1,5 bar à 2,0 bars par rapport à la pression environnante.

8. Procédé selon l'une quelconque des revendications précédentes, **caractérisé en ce que** la pression est abaissée de 0,5 bar à l'étape e).
